# EUROPEAN PATENT APPLICATION

(11) **EP 2 835 614 A1**
(43) Date of publication of application: **11.02.2015**
(21) Application number: 14179351.3
(22) Date of filing: 31.07.2014
(51) Int. Cl.: G01C 5/00, G01C 15/00

(54) **Electronic level**

(30) Priority: 08.08.2013 JP 2013165038
(71) Applicant: Kabushiki Kaisha Topcon, Tokyo (JP)
(72) Inventor: Fujioka, Takayuki, Tokyo-to, Tokyo (JP)
(74) Representative: Jennings, Nigel Robin

(57) **Abstract**

An electronic level which is arranged to receive reflected light from a pattern marked on a staff (5) and to determine the height of the sighting position and the distance to the staff, comprises an electronic level main unit (2), a sighting optical system (15) accommodated in the electronic level main unit (2) for sighting the staff (5) and a sighting device (3) provided on an upper surface of the electronic level main unit (2). The sighting device (3) can be sighted in at least in two directions, and the angle (θ) formed by the two directions is equal to or approximately equal to the field angle of the sighting optical system (5).

## Description

### BACKGROUND OF THE INVENTION

The present invention relates to an electronic level, by which it is possible to convert a pattern image of a staff to an electric signal and to obtain a sighting height and a distance to the staff from the electric signal acquired.

A level is a surveying instrument for measuring a difference of elevation. A conventional type level is a surveying instrument that an operator sights a staff installed at a measurement target point by a telescope and visually reads a numerical value given on the staff. As a result, there have been possibilities that the operator may erroneously read a scale on the staff.

In order to prevent an erroneous reading of the scale on the staff, an electronic level and a staff for electronic level have been developed, by which a staff is sighted, a pattern depicted is detected by a photodetection element, a position is calculated by converting an electric signal and the position are displayed as numerical values.

A sighting device of the conventional type electronic level is based on gun sight system, and has a structure to perform sighting on a staff for electronic level by looking into a front ridge of triangular cross-sections provided in a forward direction from a space between two rear ridges with triangular cross-sections provided adjacent to each other at rearward position of the electronic level. As a result, when the front ridge is looked into from a diagonally rear direction, a viewing field is obstructed by side surfaces of the ridges, and sighting is not possible. Therefore, by the conventional type sighting device, it has been possible to perform the sighting only in one direction, on frontal side.

Further, although a new device has been proposed in recent years, by which it is possible to measure a plurality of staffs at the same time within a range as required, however, the sighting device of the conventional type electronic level can not confirm a measurable range and is not correspondent to a function of the electronic level.

### SUMMARY OF THE INVENTION

It is an object of the present invention to provide an electronic level, by which it is possible to confirm the measurable range.

To attain the object as described above, an electronic level according to the present invention is an electronic level which receives a reflection light from a pattern marked on a staff and determines a height of sighting position and a distance to the staff, comprising an electronic level main unit, a sighting optical system accommodated in the electronic level main unit for sighting the staff and a sighting device provided on an upper surface of the electronic level main unit, wherein the sighting device can be sighted at least in two directions, and an angle formed by two directions is equal to or approximately equal to a field angle of the sighting optical system.

Further, in the electronic level according to the present invention, the sighting device comprises a table part, two sighting pins provided adjacent to each other on a peripheral portion of an upper surface of the table part, a sight aligning pin provided on a peripheral portion opposite to the sighting pin on an upper surface of the table part and two measuring range confirming pins provided at positions separated from the sight aligning pin by a predetermined distance in circumferential direction, wherein an angle formed by two of the measuring range confirming pins with respect to a middle point between the sighting pins is equal to or approximately equal to a field angle of the sighting optical system.

Further, in the electronic level according to the present invention, the sighting device comprises a table part rotatably provided at a predetermined angle in leftward and rightward directions from a reference position, two sighting pins provided adjacent to a peripheral portion of an upper surface of the table part and a sight aligning pin provided on a peripheral portion opposite to the sighting pins on an upper surface of the table part, wherein an angle formed by the sight aligning pin rotated at a predetermined angle in leftward and rightward directions from the reference position is equal to or approximately equal to a field angle of the sighting optical system.

Furthermore, in the electronic level according to the present invention, the sighting pin and the sight aligning pin are designed in a conical shape.

According to the present invention, the electronic level is an electronic level which receives a reflection light from a pattern marked on a staff and determines a height of sighting position and a distance to the staff, comprising an electronic level main unit, a sighting optical system accommodated in the electronic level main unit for sighting the staff and a sighting device provided on an upper surface of the electronic level main unit, wherein the sighting device can be sighted at least in two directions, and an angle formed by two directions is equal to or approximately equal to a field angle of the sighting optical system. As a result, if it can be confirmed that the staff is installed within the measurable range, it is possible to perform measurement with no need to align the sighting again to the staff, which has been moved from the original measuring position. Also, it is possible to simultaneously measure a plurality of the staffs installed within the measurable range at the same time, and this contributes to the improvement of working efficiency.

Further, according to the present invention, in the electronic level, the sighting device comprises a table part, two sighting pins provided adjacent to each other on a peripheral portion of an upper surface of the table part, a sight aligning pin provided on a peripheral portion opposite to the sighting pin on an upper surface of the table part and two measuring range confirming pins provided at positions separated from the sight aligning pin by a predetermined distance in circumferential direction, wherein an angle formed by two of the measuring range confirming pins with respect to a middle point between the sighting pins is equal to or approximately equal to a field angle of the sighting optical system. As a result, it becomes possible to confirm the measurable range by simple arrangement and at lower cost.

Further, according to the present invention, in the electronic level, the sighting device comprises a table part rotatably provided at a predetermined angle in leftward and rightward directions from a reference position, two sighting pins provided adjacent to a peripheral portion of an upper surface of the table part and a sight aligning pin provided on a peripheral portion opposite to the sighting pins on an upper surface of the table part, wherein an angle formed by the sight aligning pin rotated at a predetermined angle in leftward and rightward directions from the reference position is equal to or approximately equal to a field angle of the sighting optical system. As a result, it becomes possible to confirm the measurable range by simple arrangement and at low cost.

Furthermore, according to the present invention, in the electronic level, the sighting pin and the sight aligning pin are designed in a conical shape. As a result, even in a case where a space between the sighting pins are looked into from a diagonal direction, there is no possibility that visual field is interrupted by side wall of the sighting pins, and this contributes to the improvement of visual recognizability.

### BRIEF DESCRIPTION OF THE DRAWINGS

FIG.1 is a rear perspective view of an electronic level according to a first embodiment of the present invention.
FIG.2 is a front perspective view of the electronic level according to the first embodiment of the present invention.
FIG.3 is an explanatory drawing to show one example of a pattern marked on a staff to be measured by the electronic level.
FIG.4 is a schematical block diagram to show an optical system of the electronic level.
FIG.5 is a plan view to show a sighting device of the electronic level according to a first embodiment of the present invention.
FIG.6A to FIG.6C is an enlarged view of an essential portion to explain the sighting device, FIG.6A shows a condition where a sight aligning pin is looked into from between sighting pins, FIG.6B shows a condition where a left measuring range confirming pin is looked into from between the sighting pins, and FIG.6C shows a condition where a right measuring range confirming pin is looked into from between the sighting pins.
FIG.7 is an explanatory drawing to show a case where a plurality of staffs are measured simultaneously by an electronic level according to the first embodiment of the invention.
FIG.8 is a rear perspective view to show an electronic level according to a second embodiment of the invention.
FIG.9A to FIG.9C are explanatory drawings to explain a sighting device of the electronic level according to the second embodiment of the invention, FIG.9A shows a case where a table part is rotated in a leftward direction, and FIG.9B shows a case where a table part is rotated in a rightward direction.

### DETAILED DESCRIPTION OF THE PREFERRED EMBODIMENTS

A description will be given below on embodiments of the present invention by referring to the attached drawings.

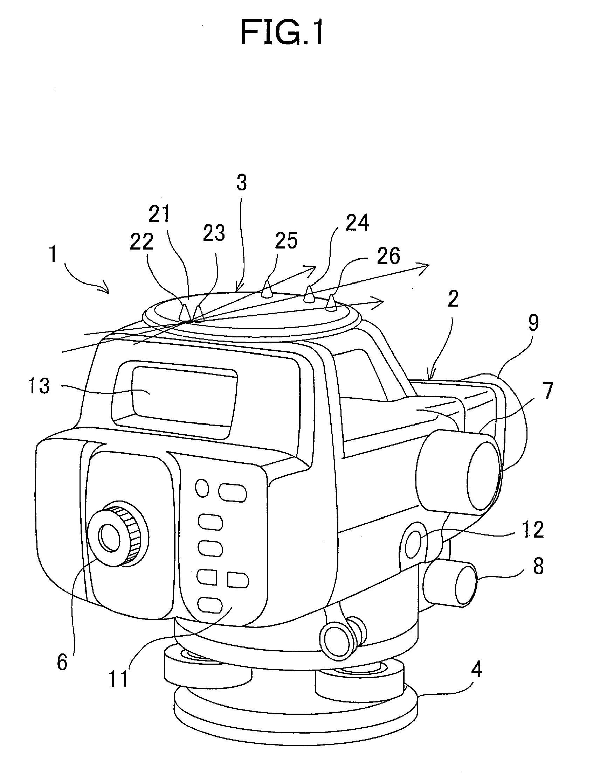

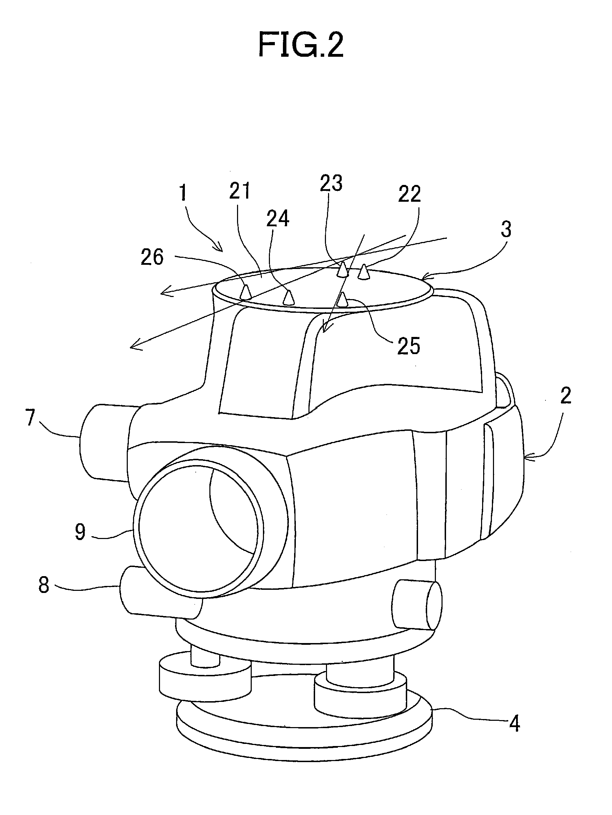

First, by referring to FIG.1 and FIG.2, a description will be given on an electronic level 1 according to a first embodiment of the present invention.

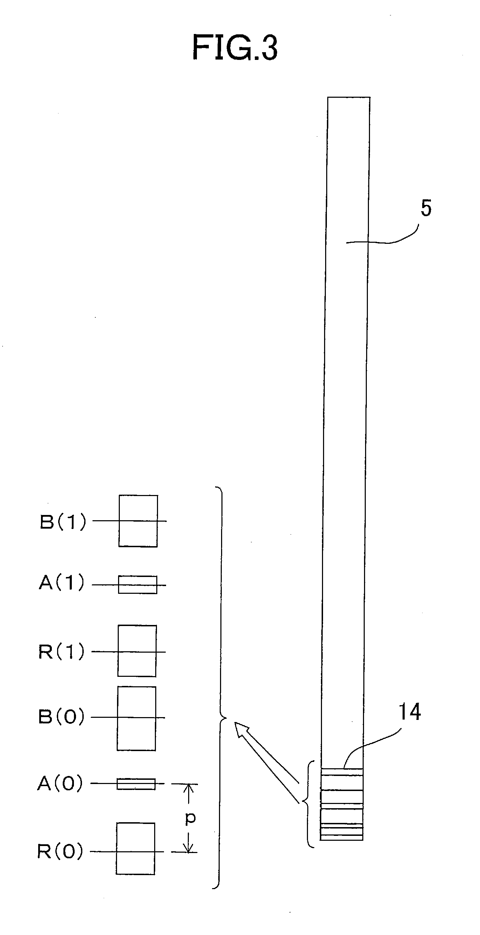

The electronic level 1 comprises an electronic level main unit 2, a sighting device 3 for sighting a target point, a base unit 4 for supporting the electronic main unit 2 and for performing leveling, an ocular lens unit 6 for sighting a staff 5 for electronic level (hereinafter referred as a staff 5; see FIG.3) at the target point, a focusing knob 7 for adjusting the focus on the target point, a direction adjusting knob 8 for adjusting a sighting direction, an objective lens unit 9 of a telescope where a reflection light from the staff 5 enters, an operation unit 11 where a power switch and a menu button and the like to change over a measurement mode are arranged, a measurement starting button 12 for carrying out a measurement, a display unit 13 where measurement results and the like are displayed, etc.

As shown in FIG.3, the staff 5 has a predetermined pattern, e.g. a bar code 14, are printed or marked (hereinafter, referred as "marked") on a straight base element. Several types of the bar codes 14 marked on the base element are used, and by identifying the types of the bar codes 14, the staffs 5 can be individually recognized. It is to be noted that the staff 5 may be a type of measuring tape where the bar codes 14 are marked on a band-like base element which can be wound up.

For instance, in the bar code 14, a first pattern A, a second pattern B, and a third pattern R are repeatedly arranged with an equal distance (p). That is, one block is constituted of three types of patterns and each block is continuously formed. If a block arranged at the lowest position is defined as 0 block, and if these are marked as R(0), A(0), and B(0) respectively, the bar codes 14 are repeatedly arranged as R(1), A(1), B(1), R(2), A(2), B(2), ·····. It is to be noted that since all patterns are repeatedly arranged at an equal interval p, a signal corresponding to this interval is regarded as a reference signal, and a sighting height can be acquired according to the reference signal.

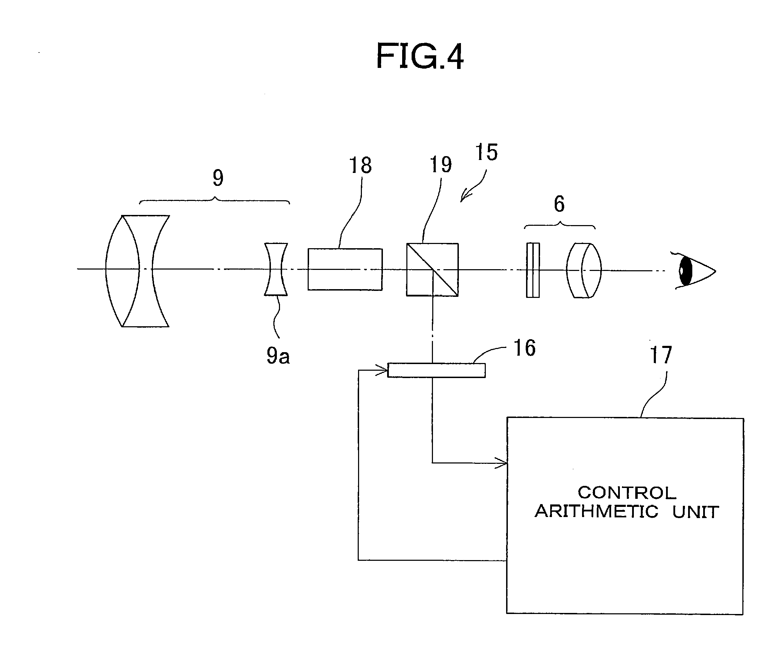

Next, by referring to FIG.4, description will be given below on an approximate arrangement of the electronic level 1 according to the present invention.

The electronic level 1 has a sighting optical system 15, a line sensor 16 and a control arithmetic unit 17. Further, the sighting optical system 15 has the objective lens unit 9 including a focusing lens 9a, a compensator 18 which is an automatic compensation mechanism for an optical axis, a beam splitter 19 and the ocular lens unit 6. The beam splitter 19 splits a reflection light from the staff 5 entering the sighting optical system 15, and the split light is received by the line sensor 16.

The control arithmetic unit 17 import signals from the line sensor 16 and controls importing of the signals. The control arithmetic unit 17 processes signals imported, reads a pattern of the bar code 14, calculates a height of sighting position, and further, is configured so as to calculate a distance to the staff 5 according to size of an image of a pattern.

Further, by combining a discrimination of types of the bar codes 14 by the control arithmetic unit 17, individual recognition of a plurality of the staffs 5 and surveying of each of the staffs 5 can be carried out at the same time.

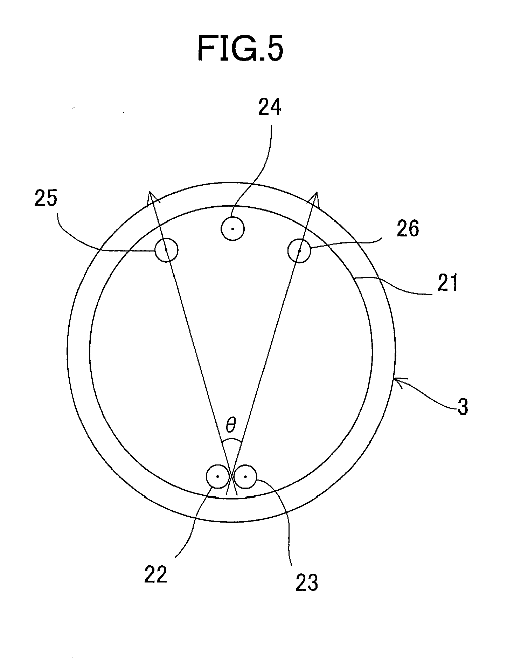

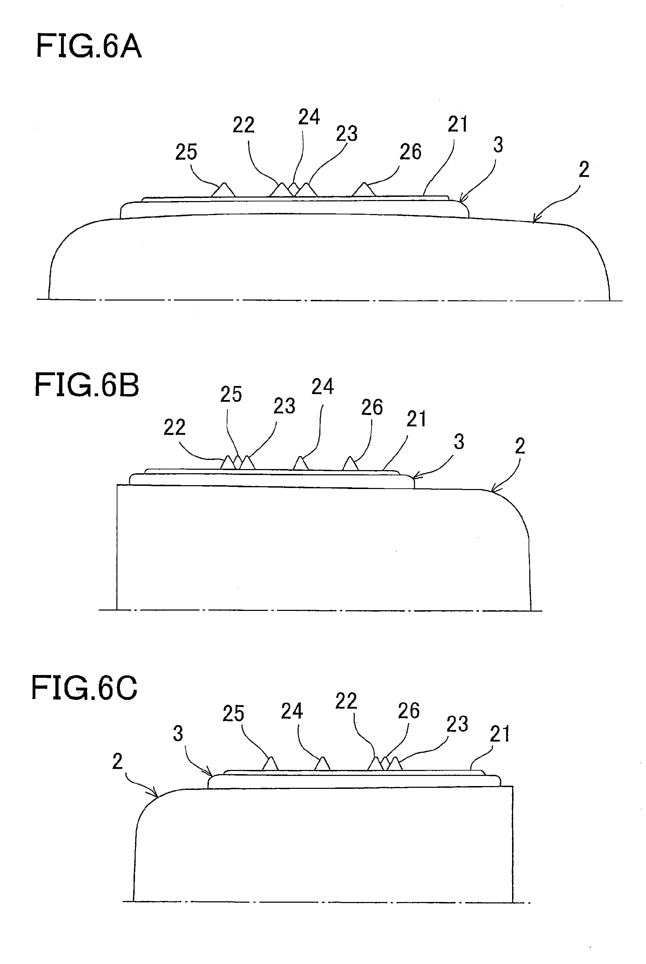

Next, by referring to FIG.5 and FIG.6A to FIG.6C, a description will be given below on the sighting device 3. In the description as given below, a position on the objective lens 9 side of the electronic level 1 is defined as a forward position, and a position on the objective lens unit 6 side is referred as a rearward position.

On an upper surface of the electronic level main unit 2, a table part 21 is fixedly provided. On the table part 21, sighting pins 22 and 23, a sight aligning pin 24, a left measuring range confirming pin 25 and a right measuring range confirming pin 26 each in conical shape are arranged along a peripheral of the table part 21. The sighting pins 22 and 23 are provided adjacent to each other at rearward positions of the peripheral portion of the table part 21, and the sight aligning pin 24 is provided at a forward position of the peripheral portion of the table part 21 opposite to the sighting pins 22 and 23. A perpendicular line drawn from the sight aligning pin 24 to a point between the sighting pins 22 and 23 runs in parallel or approximately in parallel to an optical axis of the sighting optical system 15.

At a position on the table part 21 apart by a predetermined distance in circumferential direction from the sight aligning pin 24, the left measuring range confirming pin 25 and the right measuring range confirming pin 26 are provided respectively. With a middle point between the sighting pins 22 and 23 as the center, an angle *θ* formed by the left measuring range confirming pin 25 and the right measuring range confirming pin 26 is set to an angle as required, about 40°, for instance. The angle *θ* formed by the left measuring range confirming pin 25 and the right measuring range confirming pin 26 with the middle point as the center is equal to or approximately equal to a field angle of the sighting optical system 15 and coincides or approximately coincides with a measurable range 27 (to be described later) of the electronic level 1.

In a case where measurement of the staff 5 is performed by the electronic level 1, an approximate direction of the electronic level 1 is set toward the staff 5 first, and then, as shown in FIG.6A, a space between the sighting pins 22 and 23 is looked into so that the sight aligning pin 24 can be seen between the sighting pins 22 and 23. Then, the electronic level main unit 2 is rotated by the direction adjusting knob 8 so that the sight aligning pin 24 and the staff 5 overlap.

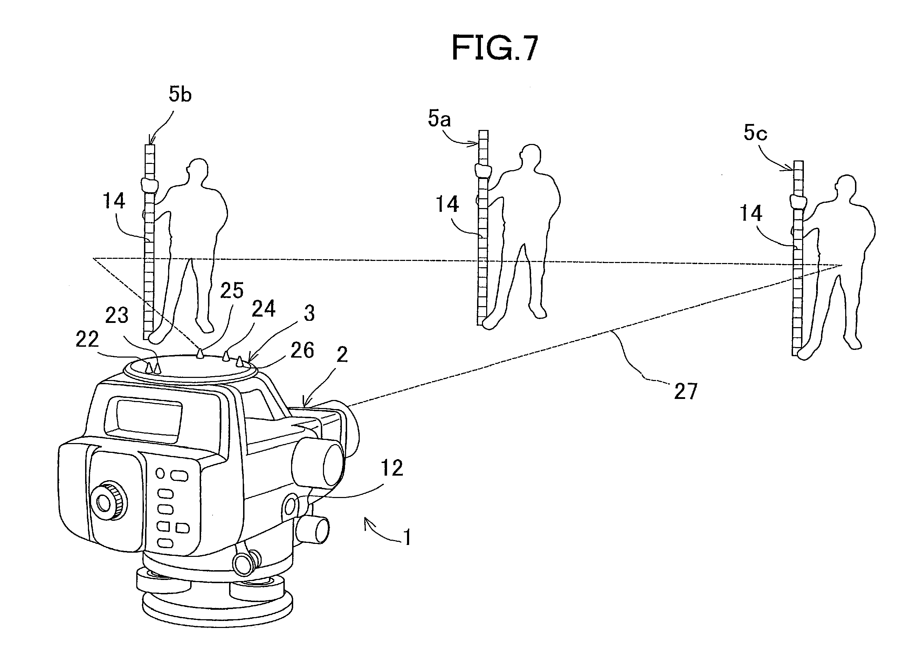

Because the angle *θ* is equal to or approximately equal to the field angle of the sighting optical system 15, as shown in FIG.6B, a region at a more rightward position than the left measuring range confirming pin 25 will be the measurable range 27 (see FIG.7) of the electronic level 1 when the left measuring range confirming pin 25 is sighted by looking into from between the sighting pins 22 and 23. Further, as shown in FIG.6C, a region at a more leftward position than the right measuring right confirming pin 26 will be the measurable range 27 of the electronic level 1 when the right measuring range confirming pin 26 is sighted by looking into from between the sighting pins 22 and 23.

Therefore, by sighting in two of the leftward and rightward directions from between the sighting pins 22 and 23, the measurable range 27 can be confirmed and a measurement can be made if a staff 5 is installed within the measurable range 27. Further, by measuring a plurality of the staffs 5 within the measurable range 27 at the same time, sighting heights and distances to the staffs 5 can be obtained.

FIG.7 shows a case where the electronic level 1 of the first embodiment is used and a measurement is carried out on the staffs 5a, 5b and 5c installed at three points, for instance. It is to be noted that the staffs 5a, 5b and 5c have bar codes 14 different from each other, and the bar codes can be identified by image processing.

First, the sighting of the electronic level 1 is aligned with respect to the staff 5a at the center in FIG.7. That is, the sight aligning pin 24 is looked into from between the sighting pins 22 and 23, and the electronic level main unit 2 is rotated by the direction adjusting knob 8 so that the sight aligning pin 24 and the staff 5a overlap.

Next, by looking into the left measuring range confirming pin 25 and the right measuring range confirming pin 26 from between the sighting pins 22 and 23, the measurable range 27 is confirmed, and it is confirmed that the staffs 5a, 5b and 5c are installed within the measurable range 27.

By pressing the measurement starting button 12 under this condition, the measurement is carried out about the staffs 5a, 5b and 5c installed at three points at the same time, and distances and heights can be determined.

It is to be noted that although the staffs 5a, 5b and 5c are installed at three points in FIG.7, two or less staffs 5 may be installed if the staffs are within the measurable range 27, or four or more staffs may be installed.

As described above, in the first embodiment, the angle *θ* formed by the left measuring range confirming pin 25 and the right measuring range confirming pin 26 with respect to the middle point between the sighting pins 22 and 23 is equal to or approximately equal to a field angle of the sighting optical system 15, and the angle *θ* is equal to or approximately equal to the measurable range 27 of the electronic level 1. Therefore, by looking into the left measuring range confirming pin 25 and the right measuring range confirming pin 26 from between the sighting pins 22 and 23, it is possible to confirm the measurable range 27 of the electronic level 1.

Further, in a case where a measurement is carried out on a plurality of points by a single staff 5, measurement can be made without aligning the sighting again with respect to the staff 5, which is moved from a first measuring position, if it can be confirmed that the staff 5 to carry out the measurement is installed within the measurable range 27, and this contributes to the improvement of working efficiency. Further, it is possible to simultaneously measure a plurality of the staffs 5 installed within the measurable range 27, an operation time can be extensively shortened, and working efficiency can be improved.

Further, since the sighting pins 22 and 23, the left measuring range confirming pin 25 and the right measuring range confirming pin 26 are conical shape, even in a case where a space between the sighting pins 22 and 23 are looked into from a diagonally rearward direction, a visual field is not obstructed by the sighting pins 22 and 23, and the left measuring range confirming pin 25 and the right measuring range confirming pin 26 can be observed, and this contributes to the improvement of visual recognizability.

Further, in the sighting device 3 of the first embodiment, it would suffice if the sighting pins 22 and 23, the sight aligning pin 24, the left measuring range confirming pin 25 and the right measuring range confirming pin 26 are provided on the table part 21 which is fixedly provided on an upper surface of the electronic level main unit 2. As a result, a confirmation of the measurable range 27 can be carried out in a simple structure and at a low cost.

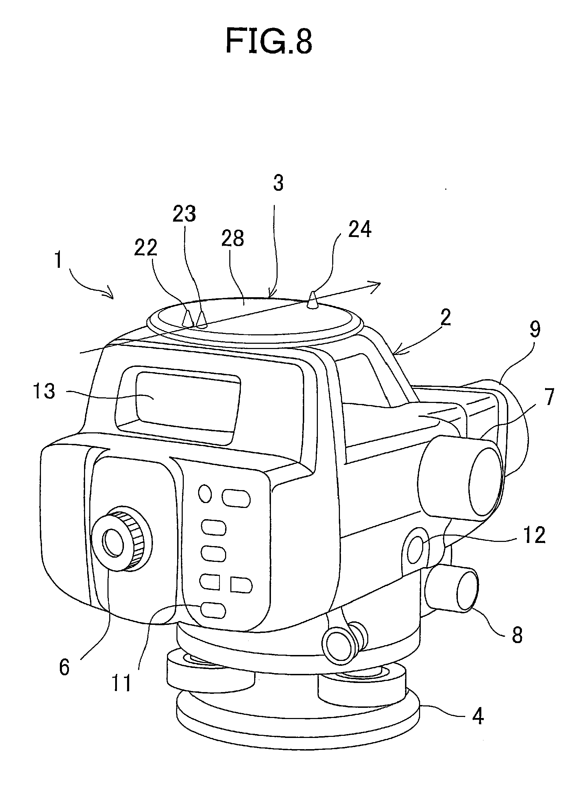

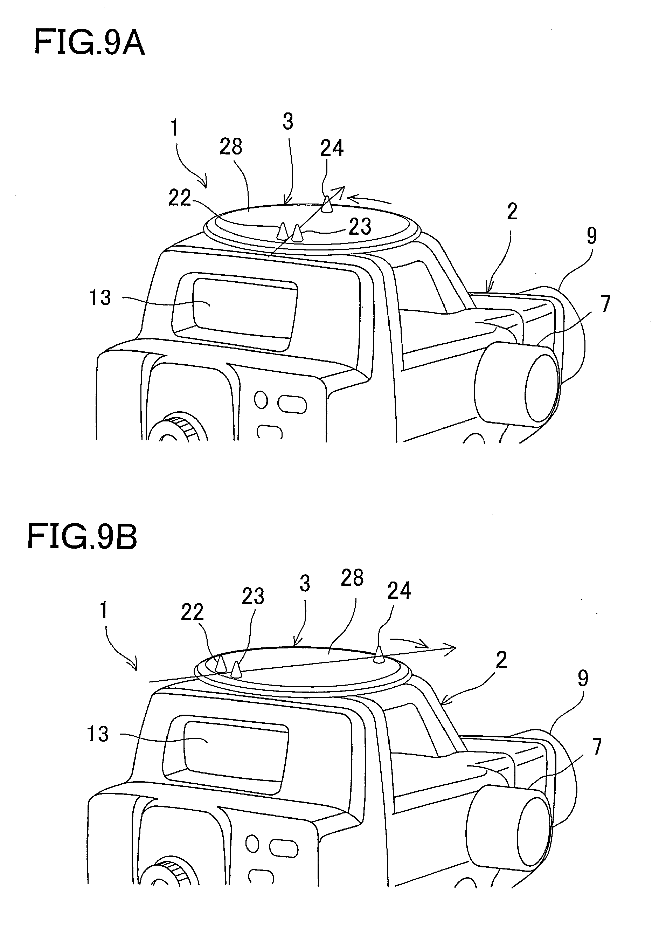

Next, by referring to FIG.8, FIG.9A and FIG.9B, a description will be given below on an electronic level 1 according to a second embodiment of the present invention. It is to be noted that in FIG.8, FIG.9A and FIG.9B, the same component as in FIG.1 is referred by the same symbol, and detailed description will be omitted.

In the second embodiment, the sighting device 3 has a table part 28 rotatably provided on an upper surface of the electronic level main unit 2.

On the table part 28, sighting pins 22 and 23 with conical shape are provided adjacent to each other in a rearward direction of a peripheral portion of the table part 28, and a sight aligning pin 24 with conical shape is provided in a forward direction of the peripheral portion of the table part 28, which is at a position opposite to the leveling pins 22 and 23.

The table part 28 is rotatable between three positions, for instance, with a reference position (see FIG.8) as the center, a left measuring range confirming position (see FIG.9A) rotated at a predetermined angle in leftward direction and a right measuring range confirming position (see FIG.9B) rotated at a predetermined angle in rightward direction. Further, a fixing mechanism (not shown) is provided, which can fix the table part 28 at the three positions.

At the reference position, it is so arranged that a perpendicular line drawn from the sight aligning pin 24 to a middle point between the sighting pins 22 and 23 runs in parallel to or in approximately parallel to an optical axis of the sighting optical system 15 (see FIG.4).

Further, when the table part 28 is rotated to the left measuring range confirming position, the sight aligning pin 24 will be at the same position as the left measuring range confirming pin 25 (see FIG.5) in the first embodiment. When the table part 28 is rotated to the right measuring range confirming position, the sight aligning pin 24 will be at the same position as the right measuring range confirming pin 26 (see FIG.5) in the first embodiment.

Therefore, with respect to the middle point between the sighting pins 22 and 23, an angle *θ* formed by the sight aligning pin 24 when the table part 28 is rotated at a predetermined angle to the left measuring range confirming position and the sight aligning pin 24 when the table part 28 is rotated at a predetermined angle to the right measuring range confirming position will be equal to or approximately equal to the field angle of the sighting optical system 15, and the measurable range 27 (see FIG.7) can be confirmed by sighting in two directions, i.e. leftward and rightward directions from between the sighting pins 22 and 23.

In a case where measurement is carried out about the staff 5 (see FIG.3) by the electronic level 1, an approximate direction of the electronic level 1 is directed toward the staff 5, and the table part 28 is set at the reference position. Then, the sight aligning pin 24 is looked into from between the sighting pins 22 and 23, and the electronic level main unit 2 is rotated by the direction adjusting knob 8 so that the sight aligning pin 24 overlaps the staff 5.

Since the angle *θ* is equal to or approximately equal to the field angle of the sighting optical system 15, the table part 28 is rotated to the left measuring range confirming position and a left end of the measurable range 27 can be confirmed by looking into and sighting the sight aligning pin 24 from between the sighting pins 22 and 23. Further, by rotating the table part 28 to the right measuring range confirming position, a right end of the measurable range 27 can be confirmed by looking into and sighting the sight aligning pin 24 from between the sighting pins 22 and 23.

Therefore, by sighting in two directions, i.e. leftward and rightward directions from between the sighting pins 22 and 23, the measurable range 27 can be confirmed, and a staff can be measured if the staff 5 is installed within the measurable range 27. Accordingly, it is possible to simultaneously measure a plurality of the staffs 5 within the measurable range 27, a sighting height and a distance to the staff 5 can be determined, and this contributes to the improvement of the working efficiency.

Further, since it would suffice if the sighting pins 22 and 23 and the sight aligning pin 24 are provided on the table part 28, which is rotatably provided on an upper surface of the electronic level main unit 2, the sighting device 3 can carry out the confirmation of the measurable range 27 in a simple structure and at a low cost.

It is to be noted that in the second embodiment, it would suffice if the table part 28 is rotatable and only one direction from the sighting pins 22 and 23 to the sight aligning pin 24 can be looked into. Thus, the sighting pins 22 and 23 and the sight aligning pin 24 may be designed as a conventional type ridge with a triangular cross-section.

Further, in the second embodiment, a fixing mechanism (not shown) is provided, which can fix the table part 28 at three positions, i.e. at the reference position, at the left measuring range confirming position, and at the right measuring range confirming position. However, a stopper mechanism may be provided so that the table part 28 does not rotate in leftward direction beyond the left measuring range confirming position and further so that the table part 28 does not rotate in rightward direction beyond the right measuring range confirming position.

Further, without adjusting the sighting of the electronic level 1 to a staff 5 at the center, confirming whether a staff 5 at one end is installed within the measurable range 27 and confirming whether a staff 5 at another end is installed within the measurable range 27 and a plurality of the staffs 5 installed within the measurable range 27 may be measured at the same time.

It is to be noted that in a case where it would suffice that only the measurable range 27 is confirmed, the sight aligning pin 24 in the first embodiment may be omitted, and it is not necessary to stop the table part 28 in the second embodiment at the center of the reference position.

## Claims

1. An electronic level (1) which receives a reflection light from a pattern marked on a staff (5) and determines a height of sighting position and a distance to said staff, comprising an electronic level main unit (2), a sighting optical system (15) accommodated in said electronic level main unit for sighting said staff and a sighting device (3) provided on an upper surface of said electronic level main unit, wherein said sighting device can be sighted at least in two directions, and an angle formed by two directions is equal to or approximately equal to a field angle of said sighting optical system.

2. An electronic level according to claim 1, wherein said sighting device (3) comprises a table part (21), two sighting pins (22, 23) provided adjacent to each other on a peripheral portion of an upper surface of said table part, a sight aligning pin (24) provided on a peripheral portion opposite to said sighting pin on an upper surface of said table part and two measuring range confirming pins (25, 26) provided at positions separated from said sight aligning pin by a predetermined distance in circumferential direction, wherein an angle formed by two of said measuring range confirming pins with respect to a middle point between said sighting pins is equal to or approximately equal to a field angle of said sighting optical system (15).

3. An electronic level according to claim 1, wherein said sighting device (3) comprises a table part (21) rotatably provided at a predetermined angle in leftward and rightward directions from a reference position, two sighting pins (22, 23) provided adjacent to a peripheral portion of an upper surface of said table part and a sight aligning pin (24) provided on a peripheral portion opposite to said sighting pins on an upper surface of said table part, wherein an angle formed by said sight aligning pin rotated at a predetermined angle in leftward and rightward directions from said reference position is equal to or approximately equal to a field angle of said sighting optical system (15).

4. An electronic level according to claim 2 or claim 3, wherein said sighting pin (22, 23) and said sight aligning pin (24) are designed in a conical shape.
